# EUROPEAN PATENT APPLICATION

(11) **EP 4 410 433 A1**
(43) Date of publication of application: **07.08.2024**
(21) Application number: 24155406.2
(22) Date of filing: 01.02.2024
(51) Int. Cl.: B02C 23/28, B02C 18/14, B02C 18/16

(54) **FLYWHEEL FOR A CHIPPING/SHREDDING MACHINE**

(30) Priority: 02.02.2023 GB 202301525
(71) Applicant: Turner R & D Limited, Alcester Warwickshire B49 5QG (GB)
(72) Inventor: Turner, Anthony, Warwickshire B49 5QG (GB)
(74) Representative: Croston, David

(57) **Abstract**

The present invention relates to a flywheel (20) for a chipping/shredding machine (10). It also relates to a chipping/shredding machine having such a flywheel. The flywheel having an axis and a direction of rotation (X-X) and comprising: a first disc (30) with a centre and an outer edge, a second disc (40) with a centre and an outer edge, and at least one radial vane (50) arranged between the first and second disc; whereby, on rotation of the flywheel, the vane generates an airflow from outside the outer face of the second disc, passing substantially axially through the airflow aperture and exiting the flywheel substantially radially outwardly of the discs.

## Description

### Field

The present invention relates to a flywheel for a chipping/shredding machine. It also relates to a chipping/shredding machine having such a flywheel.

### Background

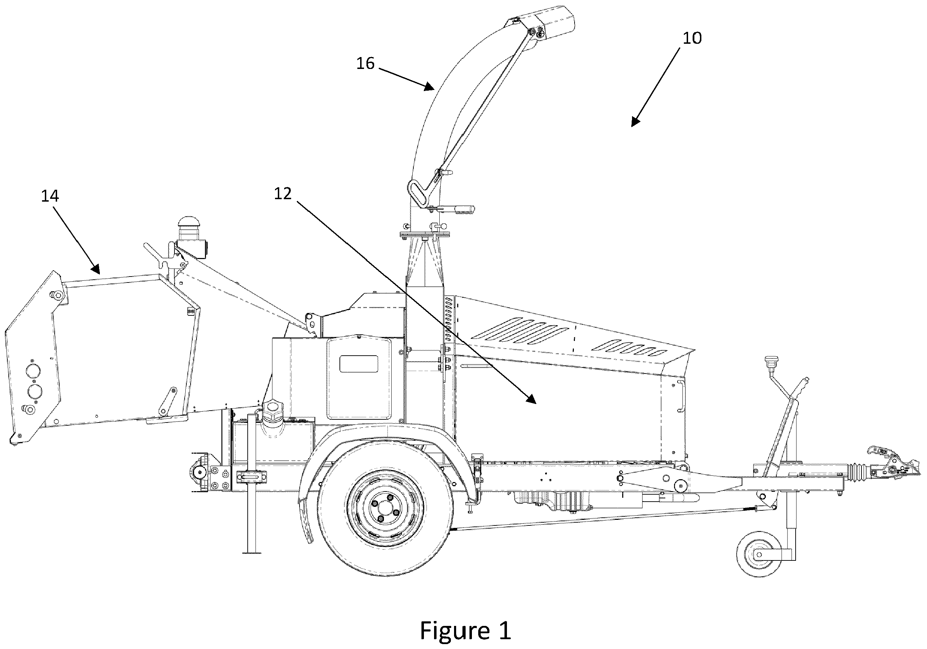

A known chipper/shredder 10 is shown in Figure 1. It comprises a cutting chamber 12 wherein is located a flywheel. The flywheel is driven in rotation by an internal combustion engine 18 housed in an engine compartment. The flywheel is equipped with at least two blade assemblies which extend along a radial line, and which are equally angularly spaced around the flywheel. Each blade assembly comprises an array of blades with an aperture formed through the flywheel just ahead of the blade array with respect to the direction of rotation of the flywheel. Wood material, such as a tree branch, to be chipped is inserted through in-feed rollers 19 in an inlet 14 in the cutting chamber 12, whereby it contacts the rotating flywheel. The in-feed rollers 19 are driven at a specified and constant rate. On each rotation of the flywheel, each blade array contacts the branch, chipping off the end of the branch. The chipped off material falls through the respective aperture into a space behind the flywheel with respect to the direction of insertion. The flywheel is equipped with a radial vane for each blade assembly, the vane on the opposite face of the flywheel than the blade assembly. The chipped material is collected by each respective vane and, by virtue of the centrifugal force induced by rotation of the flywheel, thrown out of the chipper/shredder 10 via an outlet 16 in the cutting chamber 12.

The efficiency of chipping or shredding machines is of vital importance. The more efficient these devices, the quicker work can be completed, maximising chipped/shredded material output whilst minimising money spent on fuel, risk to health and safety due to continued use and disruption of the surrounding area due to noise pollution.

A key output metric of a chipping/shredding machine is the volume of material it can chip/shred per minute. Increasing this volume is a continuing problem that has seen various solutions thereto. It is common practice to include a flywheel with at least two blade arrays, such that the flywheel makes two cuts per revolution. Each time a blade strikes material to be chipped/shredded, momentum is lost from the flywheel and thus more energy is required to return the momentum to said flywheel. It is commonly held that having a flywheel with two blades finds the optimum balance between loss of momentum per revolution and sufficient number of cuts per revolution to produce a satisfactory length of chip and volume of chipped/shredded material per minute. Flywheels tend to be of large diameter so as to increase the angular momentum and thus proportionally reduce the momentum lost as a result of each chipping contact.

Another issue that faces such chipping/shredding machines is that of cooling the internal combustion engine that powers the flywheel. This can be achieved by having cooling apertures through the body of the machine; however, this also allows noise to escape from the machine, creating a higher level of noise pollution. Alternatively, the same axle that drives the flywheel can also drive a cooling fan, however this leads to an increase in complexity of the system and increases the likelihood of component failure causing breakages in the system.

The present invention provides an improved flywheel for a chipper/shredder and an improved chipper/shredder.

### Summary

A first aspect of the invention provides a flywheel for a chipping machine, the flywheel having an axis and a direction of rotation and comprising: a first disc with a centre and an outer edge, the first disc being substantially circular with an outer face and an inner face, said centre being located on the axis of rotation, the first disc having a cut material aperture formed therethrough and a cutting assembly arranged on the outer face adjacent to and behind the cut material aperture with respect to the direction of rotation of the flywheel; a second disc with a centre and an outer edge, the second disc being substantially circular, said centre being located on the axis of rotation, the second disc having an outer face and an inner face, the second disc being parallel to and spaced apart from the first disc along the axis of rotation such that the inner faces of the first and second discs face each other, the second disc having at least one air flow aperture formed therethrough; and at least one radial vane arranged between the first and second disc; whereby, on rotation of the flywheel, the vane generates an airflow from outside the outer face of the second disc, passing substantially axially through the airflow aperture and exiting the flywheel substantially radially outwardly of the discs.

In this way, the flywheel both chips/shreds material via the cutting assembly and acts as centrifugal impeller by virtue of the at least one radial vane and the airflow aperture in the second disc. The at least one vane results in an impeller-like action that sucks air through the flywheel, assisting in the cooling of the device and helping move the material through the system. This impeller-like action enables hot air from the engine compartment to be extracted and discharged through the outlet of the cutting chamber, allowing the engine compartment to be acoustically sealed without danger of over-heating.

At least one of the vanes may have a first portion extending radially from a position adjacent the centres of the discs, and a second portion extending along a chord line from the end of the radial first portion toward the respective outer edges of the discs, said second portion being inclined relative to the radial first portion towards the direction of rotation. The flywheel may further comprise at least three vanes, at least one primary vane having both the first and second portion and at least one secondary vane having only the first portion. It may also further comprise three primary vanes and two secondary vanes. The first portions of primary and secondary vanes may be equally angularly spaced around the centres of the discs. The flywheel may further comprise a tertiary vane having only the second portion.

The outer edge of the second disc may have the same radius as the outer edge of the first disc. The air flow aperture in the second disc may be formed centrally thereof so that the second disc has an annular shape and further comprises an inner edge. The radial outer end of the first portion and/or the inner end of the second portion of the or each vane may be arranged adjacent the inner edge of the second disc. An outermost part of at least one of the vanes may extend outwardly beyond the outer edges of the discs. This further vane geometry increases the efficiency of the impeller action of the flywheel.

The first disc may further comprise at least one fin arranged on the outer edge of the disc, each fin inclined relative to a plane of the first disc and to a plane of the axis of rotation. Each fin may extend beyond the outer edge, the outer face and the inner face of the first disc. Each fin may be arranged at the same angle relative to the plane of the first disc and to the plane of the axis of rotation. The fins may be spaced equally angularly spaced about the circumference of the first disc. The fins provide further airflow to ensure no material to be chipped/shredded is pushed in the wrong direction (i.e., back in the direction from whence it came).

The first disc may further comprise a support plate adjacent to the at least one cutting assembly and located behind the cut-out in the direction of rotation. The first disc may further comprise an edge support extruding from the outer face and extending away from the at least one cutting assembly along on the outer edge. These features both strengthen the flywheel against the forces exerted upon it during the cutting impacts.

The flywheel may comprise a single cutting assembly, said cutting assembly having two blades. This means there is only one cutting impact per revolution of the flywheel, reducing the amount of momentum and energy lost and increasing the cutting efficiency and volume.

A second aspect of the invention provides a chipper, shredder or combined chipper & shredder comprising a body defining an inlet for receipt of material to be chipped; a chipper chamber comprising a flywheel as described above and an outlet for ejection of chipped material from the chipper chamber; and a drive means configured to rotate the flywheel about the axis of rotation in the direction of rotation.

The flywheel may comprise a single cutting assembly, the flywheel being rotated by the internal combustion engine to a rotation speed at least 20% faster than conventional chippers, shredders or combined chippers & shredders when in use. The rotation speed may be between 20% and 30% faster than conventional chippers, shredders or combined chippers & shredders when in use. The inlet may further comprise a plurality of in-feed rollers, each of the in-feed rollers driven at a speed to achieve a desired length of chip in the chipped material. The drive means may be an internal combustion engine, the flywheel acting as an impeller to induce cooling airflow for the internal combustion engine. In this way, the high rpm of the flywheel increases the volume of material chipped/shredded per minute due to the increased number of cutting impacts in that time period. Furthermore, the correct length of chip can also assist in increasing the volume of material chipped/shredded per minute. Thus, the efficiency of the system is increased.

A third aspect of the invention provides a chipper, shredder or combined chipper & shredder comprising a body defining an inlet for receipt of material to be chipped; a chipper chamber comprising a chipping flywheel and an outlet for ejection of chipped material from the chipper chamber; and an internal combustion engine; wherein the chipping flywheel has an axis and a direction of rotation and at least one cutting assembly arranged such that there is a single contact between a blade and the material to be chipped per rotation of the chipping flywheel; and wherein the internal combustion engine is configured to rotate the chipping flywheel about the axis of rotation in the direction of rotation to a rotation speed at least 20% faster than conventional chippers, shredders or combined chippers & shredders when in use.

The rotation speed may be between 20% and 30% faster than conventional chippers, shredders or combined chippers & shredders when in use. The inlet may further comprise a plurality of in-feed rollers, each of the in-feed rollers driven at a speed to achieve a desired length of chip in the chipped material. The chipping flywheel may the flywheel described above. In this way, the high rpm of the flywheel increases the volume of material chipped/shredded per minute due to the increased number of cutting impacts in that time period. Furthermore, the correct length of chip can also assist in increasing the volume of material chipped/shredded per minute. Thus, the efficiency of the system is increased.

### Brief Description of the Drawings

Embodiments will now be described, by way of example only, with reference to the accompanying Figures, in which:
FIGURE 1 is a perspective view of a chipper/shredder device;
FIGURE 2 is a perspective view of a flywheel according to the present invention;
FIGURE 3 is a front view of the device of Figure 2;
FIGURE 4 is a side view of the device of Figure 2;
FIGURE 5 is a back view of the device of Figure 2;
FIGURE 6 is a second front view of the device of Figure 2;
FIGURE 7 is a perspective view of a flywheel assembly according to the present invention;
FIGURE 8 is a side view of the assembly of Figure 7;
FIGURE 9 is an exploded component view of the assembly of Figure 7;
FIGURE 10 is a diagrammatic representation of a chipper/shredder device according to the present invention.

### Detailed Description of Embodiments

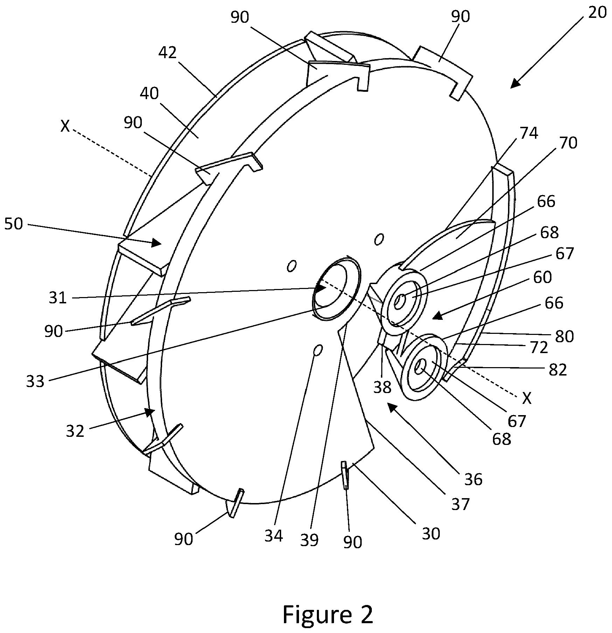

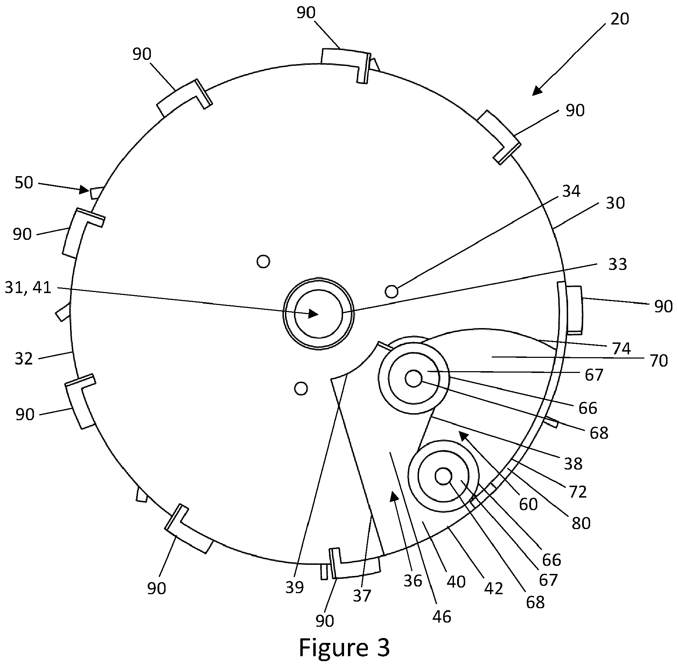

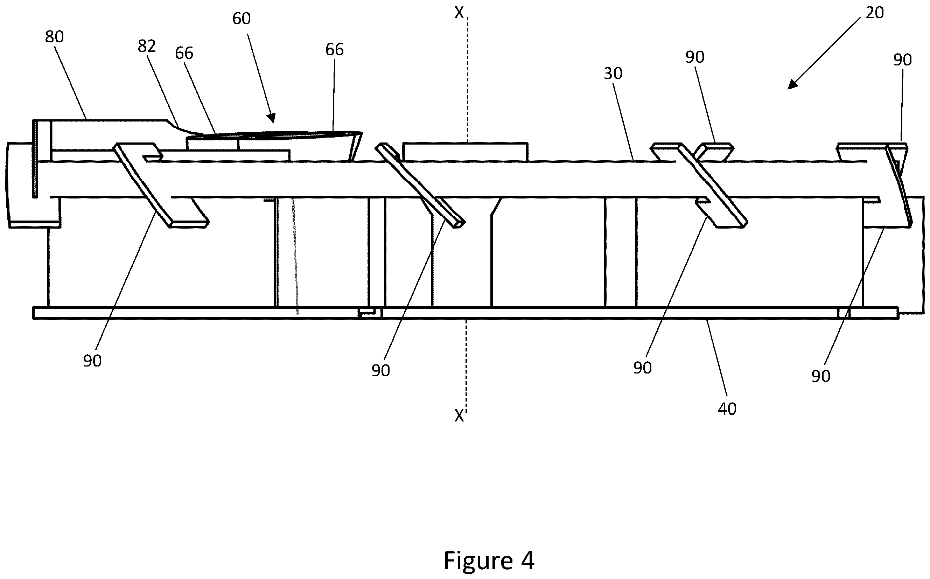

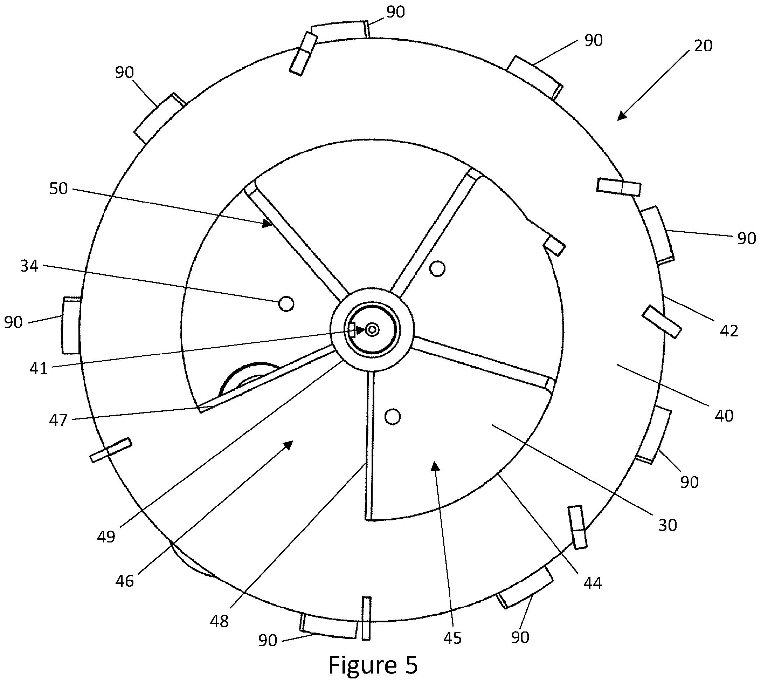

In Figures 2 to 6, a flywheel 20 according to the present invention has a first disc 30, a second disc 40 and vanes 50 formed therebetween. The flywheel 20 has an axis of rotation X-X. The first disc 30 has blade attachment array 60. The flywheel described below is for chipping or shredding up to a 160mm capacity (that is, a maximum diameter of material to be chipped/shredded of 160mm). Other dimensions are possible to accommodate different capacities.

The first disc 30 is a substantially circular plate with a diameter of 490mm and a thickness of 6mm. Diameters in the range of 245mm to 720mm and thicknesses in the range of 6mm to 12mm are also envisaged. This is less than that of the flywheel of the known chipper 10, as with the additional mass of the second disc 40 over the known chipper 10 the radii can be reduced whilst ensuring the angular momentum of the flywheel 20 is maintained at a sufficient level. The first disc 30 has a centre 31 and an outer edge 32. The centre 31 has a circular aperture 33 through the axis of rotation X-X, the function of which is discussed in greater detail below. Adjacent to the aperture 33 are three securing bores 34, arranged equidistantly around the aperture 33. The function of these securing bores 34 is also discussed in greater detail below.

First disc 30 further comprises an aperture 36 extending radially inwardly from the outer edge 32 towards the centre 31. The aperture 36 has a first edge 37 and an opposing second edge 38, with a joining inner edge 39. The inner edge 39 is curved such that it is concentric with aperture 33.

The second disc 40 is an annulus, having a centre 41, a circular outer edge 42 and a circular inner edge 44 delimiting an airflow aperture 45 formed centrally of the second disc 40. The outer edge 42 has the same radius as that of the outer edge 32 of the first disc 30. The inner edge 44 has the diameter of 160mm, however diameters in the range of 150mm to 250mm are also envisaged. The second disc 40 has a thickness 6mm, but thicknesses in the range of 6mm to 12mm are also envisaged. A protrusion 46 extends radially from the inner edge 44. The protrusion 46 has a first edge 47 and an opposing second edge 48, joined by an inner edge 49. Inner edge 49 has the same radius of curvature as the aperture 33 of first disc 30.

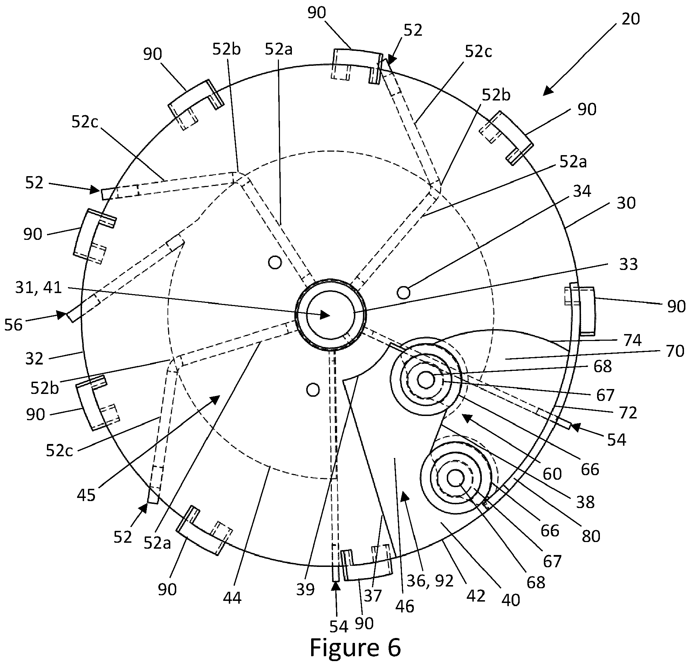

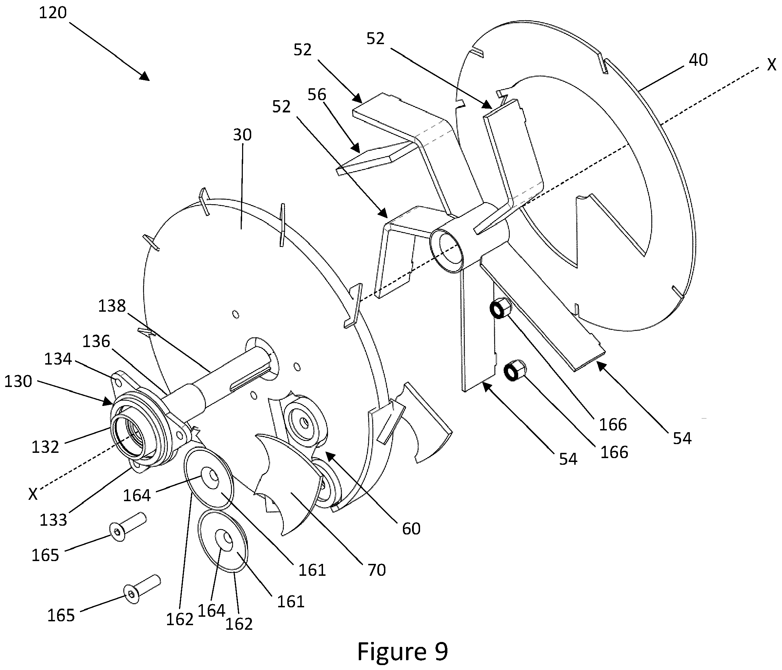

There are three types of vanes 50: scoop vanes 52, support vanes 54 and a blade vane 56. The vanes are best seen in Figures 6 and 9. The flywheel 20 comprises three scoop vanes 52, two support vanes 54 and a single blade vane 56. Scoop vanes 52 have inner portions 53a, curved joint portions 53b and outer portions 53c. The support vanes 54 and the blade vane 56 are formed of a single portion.

The blade attachment array 60 comprises a pair of blade pockets 66 that extrude from the first disc 30. Each blade pocket 66 is adjacent to the second edge 38 of the aperture 36 of the first disc 30. Each blade pocket 66 is circular with a recessed base 67 and an attachment bore 68, the base 67 and the attachment bore 68 being arranged concentrically within each blade pocket 66.

Adjacent to the blade pockets 66 on the first disc 30, there is a further support plate 70. Support plate 70 extends from the first disc 30 parallel to the axis of rotation X-X with a thickness of 6mm, but thicknesses in the range of 6mm to 12mm are also envisaged. The support plate 70 has a first edge 72 that extends from the blade pocket 66 adjacent the outer edge 32, following said edge 32. The support plate has a further second edge 74 that extends from the blade pocket 66 adjacent the centre 31 of the first disc 30 in a convex arc to the outer edge 32.

Extending parallel to the axis of rotation X-X from adjacent to the blade pocket 66 along the outer edge 32 of the first disc 30 is an edge support 80 which extends away from the first disc 30. The edge support 80 has an initial curved portion 82 adjacent to the blade pockets 66, such that the part of the edge support 80 closest to the blade pocket 66 is at an equal height to that of the blade pocket 66 relative to the first disc 30.

The first disc 30 and second disc 40 are arranged in a parallel fashion such that their outer edges 32, 42 are aligned, and such that the curvature of the aperture 33 and the inner edge 49 of the protrusion 46 of the second disc 40 are also aligned. As can best be seen in Figure 6, the protrusion 46 of the second disc 40 and the support vanes 54 bound a chamber 92.

The vanes 50 are affixed to both the first plate 30 and second disc 40. The inner portion 53a of each scoop vane 52 is dimensioned such that the curved joint portion 53b coincides with the inner edge 44 of the second disc 40. Meanwhile, the blade vane 56 begins at the inner edge 44 of the second disc 40 and extends outwards towards the outer edge 42. The three scoop vanes 52 and two support vanes 54 are arranged such that their inner ends are equidistantly spaced out around the centres 31, 41 of the first and second discs 30, 40. The inner portions 53a of scoop vanes 52 and both portions 55a, 55c of the support vanes 54 are angled such that they extend outwardly towards the outer edges of the flywheel 20 from the centre 31 of the first disc 30. Each vane 52, 54, 56 extends beyond the outer edges 32, 42 of the first and second discs 30, 40.

The first disc 30 has a series of fins 90 arranged about the outer edge 32. The fins 90 are spaced equidistantly around the portion of the outer edge 32 without the aperture 36 or edge support 80. Each fin 90 extends from both sides of the first disc 30 and away from the outer edge 32. Each fin 90 is inclined at an angle of 45° relative to the plane of the first disc 30. However, other angles in the range of 30° to 60° are also envisaged.

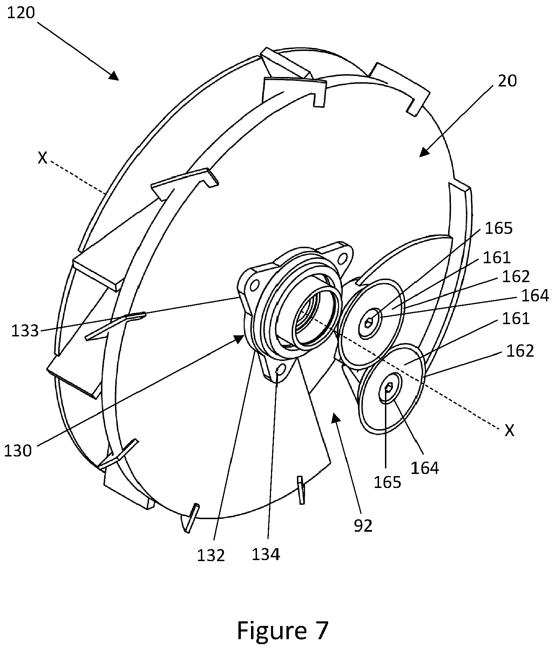

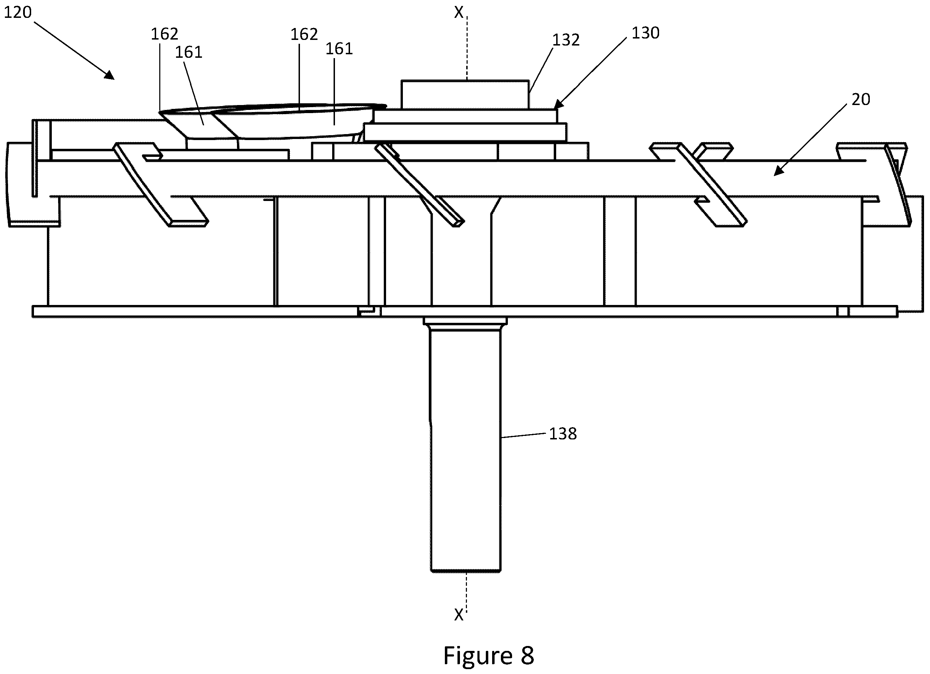

In Figures 7 to 9, a flywheel assembly 120 according to the present invention has the flywheel 20, a spindle 130 and blades 161.

Each blade 161 is circular with cutting edge 162 and a central attachment bore 164. Each blade 161 is seated in the respective recessed base 67 of the blade attachment array 60 and attached to the first disc 30 via a bolt 165, arranged through the attachment bores 164, 68 of the blade 161 and the blade pocket 66, and a nut 166. The recessed base 67 of each blade pocket 66 is shaped such that it provides support to the blade 161 and allows for a solid attachment.

A spindle 130 extends through the aperture 33 of the first disc 30, the spindle 130 having an attachment portion 132 and a drive portion 138 at opposing ends, with a middle portion 136 arranged therebetween. The attachment portion has a triangular flange 133 with three attachment points 134 arranged equidistantly.

The spindle 130 is attached to the first disc 30 via attachment points 134 and securing bores 34, via welding (although other attachment means are also envisioned). The middle portion 136 of the spindle 130 is affixed to the inner edge 49 of the protrusion 46 of the second disc 40, as well as the inner ends of the scoop vanes 52 and the support vanes 56, via welding. A drive axle (not shown) is connected to the drive portion 138 of the spindle 130, such that the flywheel assembly 120 can be driven to rotate about the axis of rotation X-X, powered by the internal combustion engine 18.

In use, the internal combustion engine 18 is used to rotate the flywheel assembly 120 about the rotation axis X-X. The rotational speed of the flywheel assembly 120 is changed depending on the size and capacity of the chipper/shredder 10 it is utilised with. The range of rotation speeds covered is considerably higher, specifically 20% to 30% higher, than that of the known chipper 10, as the increase in rotation speed, as well as correspondingly adjusting the speed of rotation of the in-feed rollers 19, allows for the same number of cuts per set time interval with a single blade attachment array 60, when compared to the slower flywheel of the known chipper 10 with multiple blade arrays.

Therefore, the combination of the additional mass of the two discs 30, 40, the smaller outer diameters of the first and second discs 30, 40 and the higher rotational speed maintains the required angular momentum for chipping/shredding. This also allows the flywheel assembly 120 to be more compact whilst maintaining the angular momentum.

Material to be chipped/shredded is inserted through the inlet 14 such that it contacts the cutting edges 162 of the blades 161 as they rotate about the axis of rotation X-X.

Chipped material passes into the chamber 92 delimited by the vanes 54 and protrusion 46. As the chipped material chamber 92 passes the outlet 16, the centrifugal force causes the material to be thrown out of the outlet 16. Any material which is not ejected may fall back into the chipped material chamber 92 to be ejected on another revolution or may be caught by one of the scoop vanes 52, again to be ejected as that vane 52 passes the outlet 16.

By having a single group of blades 161 on the flywheel assembly 120, there is only a single impact between blades 161 and the material to be chipped/shredded per revolution of flywheel assembly 120. The support vanes 54 and blade vane 56 ensure that the first and second discs 30, 40 are not deformed by the cutting impacts. All the vanes 50 help to strengthen the flywheel assembly 120 by providing support between the first and second discs 30, 40.

The inventors have found that reducing the number of chipping impacts per revolution but increasing the revolutions per minute, alongside correspondingly adjusting the speed of rotation of the in-feed rollers 19, results in an increase in the amount of material which can be chipped and/or allows the angular momentum of the flywheel assembly 120 to be maintained with less energy input. Said adjustment of the speed of rotation of the in-feed rollers 19 has been found to achieve a satisfactory length of chip in the chipped/shredded material, when in combination with the other parameter changes.

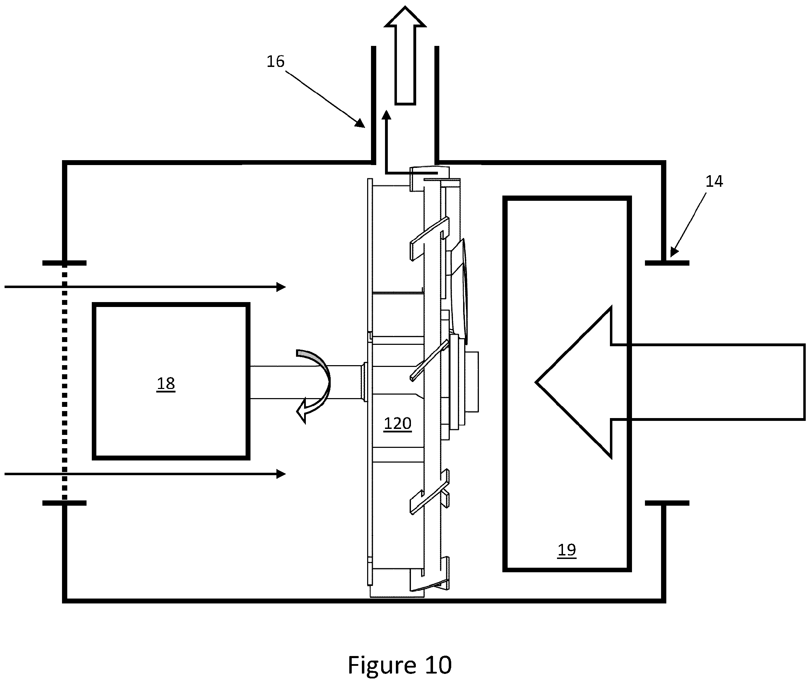

The combination of the vanes 50 means that the flywheel acts as a centrifugal impeller, pulling air through the machine, as shown diagrammatically in Figure 10. The airflow is primarily provided by the shape of scoop vanes 52, which pull air through the aperture 45 of the second disc 40 into the flywheel assembly 120 between the first and second discs 30, 40, where the air meets the chipped/shredded material. Then, a combination of the airflow encouraged by the vanes 50 and the physical force of the scoop vanes 52 against the chipped/shredded material throws the chipped/shredded material out of the flywheel assembly 120 through outlet 16 at a greater speed, considerably reducing the frequency of blockages in the system, especially when processing wet material.

The second disc 40 forms part of this centrifugal impeller effect, directing the air into outlet 16. Furthermore, the second disc 40 supports and strengthens the vanes 50, in addition to forming part of the chipped material chamber 92.

As the air is pulled in, the impeller action also provides cooling to the internal combustion engine 18 by pulling air through the radiator of the engine 18. Fins 90 add further airflow from the inlet 16 into the cutting chamber 12 to ensure that no chipped/shredded material is pushed back into the inlet 14. The fins 90 direct the air being sucked from the engine compartment to the outlet 16 and stop airflow past the flywheel assembly 120, out of the inlet 14 and towards the operators of the chipper/shredder 10. The airflow produced by rotation of the flywheel assembly 120 reduces the chance of blockages within the chipper/shredder 10. In this way, the efficiency of the chipper/shredder 10 is improved.

In an alternative embodiment, the blade array comprises a single blade, either a single, circular blade as per the embodiment described above, or a straight knife-like blade running parallel to the second edge of the aperture of the first disc. In this way, a single cutting impact per revolution is still maintained.

Overall, by providing the second disc 40, the flywheel assembly 120 diameter can be reduced, the flywheel assembly 120 rotational speed increased, and the blade arrays reduced to one. That, in turn, allows the angular momentum of the flywheel assembly 120 to be maintained along with the amount of material chipped per revolution. Finally, as the flywheel assembly 120 rotational speed has been increased, the impeller action of the vanes 50 together with the annular second disc 40 creates a centrifugal impeller effect, enabling the engine compartment to be acoustically lined to reduce noise and increasing airflow through the chipper/shredder 10, which promotes a cooling airflow over the internal combustion engine 18, without increasing noise, and increases the rate of ejection of chipped material from the chipper/shredder 10, a limiting factor in material (especially wet material) throughput.

The inventors have discovered that the combination of:
- using a single cutting impact per revolution of the flywheel assembly 120;
- increasing the rotation speed of the flywheel assembly 120 by 20% to 30%; and
- correspondingly adjusting the speed of rotation of the in-feed rollers 19 to achieve a satisfactory length of chip in the chipped material;
increases the tonnage of material outputted per hour by at least 25% compared to existing "two cuts per revolution, larger flywheel" chippers of equivalent size/horsepower. The length of the chip has an effect on the tonnage per hour processed. The preferred chip length is in the range of 10mm to 25mm. The inventors have discovered that within that range a 12mm chip produces a further increase in the tonnage of material outputted per hour of 10% to 15%, i.e. c.27.5%-29% more than existing equivalent chippers.

### Clauses

1. A flywheel for a chipping machine, the flywheel having an axis and a direction of rotation and comprising:
   a first disc with a centre and an outer edge, the first disc being substantially circular with an outer face and an inner face, said centre being located on the axis of rotation, the first disc having a cut material aperture formed therethrough and a cutting assembly arranged on the outer face adjacent to and behind the cut material aperture with respect to the direction of rotation of the flywheel;
   a second disc with a centre and an outer edge, the second disc being substantially circular, said centre being located on the axis of rotation, the second disc having an outer face and an inner face, the second disc being parallel to and spaced apart from the first disc along the axis of rotation such that the inner faces of the first and second discs face each other, the second disc having at least one air flow aperture formed therethrough; and
   at least one radial vane arranged between the first and second disc;
   whereby, on rotation of the flywheel, the vane generates an airflow from outside the outer face of the second disc, passing substantially axially through the airflow aperture and exiting the flywheel substantially radially outwardly of the discs.
2. The flywheel according to clause 1, wherein at least one of the vanes has a first portion extending radially from a position adjacent the centres of the discs, and a second portion extending along a chord line from the end of the radial first portion toward the respective outer edges of the discs, said second portion being inclined relative to the radial first portion towards the direction of rotation.
3. The flywheel according to clause 2, further comprising at least three vanes, at least one primary vane having both the first and second portion and at least one secondary vane having only the first portion.
4. The flywheel according to clause 3, further comprising three primary vanes and two secondary vanes.
5. The flywheel according to either of clause 3 and 4, wherein the first portions of primary and secondary vanes are equally angularly spaced around the centres of the discs.
6. The flywheel according to any of clauses 3 to 5, further comprising a tertiary vane having only the second portion.
7. The flywheel according to any of the preceding clauses, wherein the outer edge of the second disc having the same radius as the outer edge of the first disc.
8. The flywheel according to any of the preceding clauses, wherein the air flow aperture in the second disc is formed centrally thereof so that the second disc has an annular shape and further comprises an inner edge.
9. The flywheel according to clause 8, wherein the radial outer end of the first portion and/or the inner end of the second portion of the or each vane is arranged adjacent the inner edge of the second disc.
10. The flywheel according to any of the preceding clauses, wherein an outermost part of at least one of the vanes extends outwardly beyond the outer edges of the discs.
11. The flywheel according to any of the preceding clauses, wherein the first disc further comprises at least one fin arranged on the outer edge of the disc, each fin inclined relative to a plane of the first disc and to a plane of the axis of rotation.
12. The flywheel according to clause 11, wherein each fin extends beyond the outer edge, the outer face and the inner face of the first disc.
13. The flywheel according to either of clause 11 or 12, wherein each fin is arranged at the same angle relative to the plane of the first disc and to the plane of the axis of rotation.
14. The flywheel according to any of clauses 11 to 13, wherein the fins are spaced equally angularly spaced about the circumference of the first disc.
15. The flywheel according to any of the preceding clauses, the first disc further comprising a support plate adjacent to the at least one cutting assembly and located behind the cut-out in the direction of rotation.
16. The flywheel according to any of the preceding clauses, the first disc further comprising an edge support extruding from the outer face and extending away from the at least one cutting assembly along on the outer edge.
17. The flywheel according to any of the preceding clauses, comprising a single cutting assembly, said cutting assembly having two blades.
18. A chipper, shredder or combined chipper & shredder comprising a body defining:
   an inlet for receipt of material to be chipped;
   a chipper chamber comprising a flywheel according to any of the preceding clauses and an outlet for ejection of chipped material from the chipper chamber; and
   a drive means configured to rotate the flywheel about the axis of rotation in the direction of rotation.
19. The chipper, shredder or combined chipper & shredder according to clause 18, the flywheel comprising a single cutting assembly, the flywheel being rotated by the internal combustion engine to a rotation speed at least 20% faster than conventional chippers, shredders or combined chippers & shredders when in use.
20. The chipper, shredder or combined chipper & shredder according to clause 19, the rotation speed being between 20% and 30% faster than conventional chippers, shredders or combined chippers & shredders when in use.
21. The chipper, shredder or combined chipper & shredder according to any of clauses 18 to 20, wherein the inlet further comprises a plurality of in-feed rollers, each of the in-feed rollers driven at a speed to achieve a desired length of chip in the chipped material.
22. The chipper, shredder or combined chipper & shredder according to any of clauses 18 to 21, wherein the drive means is an internal combustion engine, the flywheel acting as an impeller to induce cooling airflow for the internal combustion engine.
23. A chipper, shredder or combined chipper & shredder comprising a body defining:
   an inlet for receipt of material to be chipped;
   a chipper chamber comprising a chipping flywheel and an outlet for ejection of chipped material from the chipper chamber; and
   an internal combustion engine;

   wherein the chipping flywheel has an axis and a direction of rotation and at least one cutting assembly arranged such that there is a single contact between a blade and the material to be chipped per rotation of the chipping flywheel; and
   wherein the internal combustion engine is configured to rotate the chipping flywheel about the axis of rotation in the direction of rotation to a rotation speed of at least 20% faster than conventional chippers, shredders or combined chippers & shredders when in use.
24. The chipper, shredder or combined chipper & shredder according to clause 23, the rotation speed being between 20% and 30% faster than conventional chippers, shredders or combined chippers & shredders when in use.
25. The chipper, shredder or combined chipper & shredder according to either of clauses 23 or 24, wherein the inlet further comprises a plurality of in-feed rollers, each of the in-feed rollers driven at a speed to achieve a desired length of chip in the chipped material.
26. The chipper, shredder or combined chipper & shredder according to any of clauses 23 to 25, wherein the chipping flywheel is the flywheel according to any of clauses 1 to 17.

## Claims

1. A flywheel for a chipping machine, the flywheel having an axis and a direction of rotation and comprising:
a first disc with a centre and an outer edge, the first disc being substantially circular with an outer face and an inner face, said centre being located on the axis of rotation, the first disc having a cut material aperture formed therethrough and a cutting assembly arranged on the outer face adjacent to and behind the cut material aperture with respect to the direction of rotation of the flywheel;
a second disc with a centre and an outer edge, the second disc being substantially circular, said centre being located on the axis of rotation, the second disc having an outer face and an inner face, the second disc being parallel to and spaced apart from the first disc along the axis of rotation such that the inner faces of the first and second discs face each other, the second disc having at least one air flow aperture formed therethrough; and
at least one radial vane arranged between the first and second disc;
whereby, on rotation of the flywheel, the vane generates an airflow from outside the outer face of the second disc, passing substantially axially through the airflow aperture and exiting the flywheel substantially radially outwardly of the discs.

2. The flywheel according to claim 1, wherein at least one of the vanes has a first portion extending radially from a position adjacent the centres of the discs, and a second portion extending along a chord line from the end of the radial first portion toward the respective outer edges of the discs, said second portion being inclined relative to the radial first portion towards the direction of rotation.

3. The flywheel according to claim 2, further comprising at least three vanes, at least one primary vane having both the first and second portion and at least one secondary vane having only the first portion.

4. The flywheel according to claim 3, further comprising three primary vanes and two secondary vanes.

5. The flywheel according to either of claims 3 and 4, wherein the first portions of primary and secondary vanes are equally angularly spaced around the centres of the discs.

6. The flywheel according to any of claims 3 to 5, further comprising a tertiary vane having only the second portion.

7. The flywheel according to any of the preceding claims, wherein the outer edge of the second disc having the same radius as the outer edge of the first disc.

8. The flywheel according to any of the preceding claims, wherein the air flow aperture in the second disc is formed centrally thereof so that the second disc has an annular shape and further comprises an inner edge; preferably wherein the radial outer end of the first portion and/or the inner end of the second portion of the or each vane is arranged adjacent the inner edge of the second disc.

9. The flywheel according to any of the preceding claims, wherein an outermost part of at least one of the vanes extends outwardly beyond the outer edges of the discs.

10. The flywheel according to any of the preceding claims, wherein the first disc further comprises at least one fin arranged on the outer edge of the disc, each fin inclined relative to a plane of the first disc and to a plane of the axis of rotation.

11. The flywheel according to claim 10, wherein each fin extends beyond the outer edge, the outer face and the inner face of the first disc.

12. The flywheel according to either of claims 10 or 11, wherein each fin is arranged at the same angle relative to the plane of the first disc and to the plane of the axis of rotation; and/or wherein the fins are spaced equally angularly spaced about the circumference of the first disc.

13. The flywheel according to any of the preceding claims, the first disc further comprising a support plate adjacent to the at least one cutting assembly and located behind the cut-out in the direction of rotation; and/or wherein, the first disc further comprising an edge support extruding from the outer face and extending away from the at least one cutting assembly along on the outer edge; and/or comprising a single cutting assembly, said cutting assembly having two blades.

14. A chipper, shredder or combined chipper & shredder comprising a body defining:
an inlet for receipt of material to be chipped;
a chipper chamber comprising a flywheel according to any of the preceding claims and an outlet for ejection of chipped material from the chipper chamber; and
a drive means configured to rotate the flywheel about the axis of rotation in the direction of rotation.

15. The chipper, shredder or combined chipper & shredder according to claim 14, the flywheel comprising a single cutting assembly, the flywheel being rotated by the internal combustion engine to a rotation speed at least 20% faster than conventional chippers, shredders or combined chippers & shredders when in use; preferably wherein the rotation speed being between 20% and 30% faster than conventional chippers, shredders or combined chippers & shredders when in use.

16. The chipper, shredder or combined chipper & shredder according to either of claims 14 or 15, wherein the inlet further comprises a plurality of in-feed rollers, each of the in-feed rollers driven at a speed to achieve a desired length of chip in the chipped material; and/or wherein the drive means is an internal combustion engine, the flywheel acting as an impeller to induce cooling airflow for the internal combustion engine.

17. A chipper, shredder or combined chipper & shredder comprising a body defining:
an inlet for receipt of material to be chipped;
a chipper chamber comprising a chipping flywheel and an outlet for ejection of chipped material from the chipper chamber; and
an internal combustion engine;
wherein the chipping flywheel has an axis and a direction of rotation and at least one cutting assembly arranged such that there is a single contact between a blade and the material to be chipped per rotation of the chipping flywheel; and
wherein the internal combustion engine is configured to rotate the chipping flywheel about the axis of rotation in the direction of rotation to a rotation speed of at least 20% faster than conventional chippers, shredders or combined chippers & shredders when in use.

18. The chipper, shredder or combined chipper & shredder according to claim 17, wherein the rotation speed being between 20% and 30% faster than conventional chippers, shredders or combined chippers & shredders when in use; and/or
wherein the inlet further comprises a plurality of in-feed rollers, each of the in-feed rollers driven at a speed to achieve a desired length of chip in the chipped material;
and/or wherein the chipping flywheel is the flywheel according to any of claims 1 to 13.
